# EUROPEAN PATENT APPLICATION

(11) **EP 3 474 260 A1**
(43) Date of publication of application: **24.04.2019**
(21) Application number: 17812722.1
(22) Date of filing: 14.06.2017
(51) Int. Cl.: G09F 3/02, G06K 19/06

(54) **TWO-DIMENSIONAL CODE ANTI-COUNTERFEITING STRUCTURE**

(30) Priority: 17.06.2016 CN 201610439377
(71) Applicant: Greatview Aseptic Packaging Co., Ltd., Beijing 100015 (CN)
(72) Inventor: LI, Ben, Beijing 100015 (CN)
(74) Representative: Noréns Patentbyrå AB
(86) International application number: PCT/CN2017/088285
(87) International publication number: WO 2017/215611

(57) **Abstract**

A two-dimensional code anti-counterfeiting structure (10), comprising a first two-dimensional code structure (1) and a second two-dimensional code structure (2), wherein the first two-dimensional code structure(1) and the second two-dimensional code structure (2) are obtained by means of dividing the complete two-dimensional code anti-counterfeiting structure (10), and are respectively arranged on two adjacent faces of product packaging. A division line (3) between the first two-dimensional code structure (1) and the second two-dimensional code structure (2) coincides with a folded edge (4) of the two adjacent faces, and when the two adjacent faces of the product packaging are flattened to be located on the same plane, the first two-dimensional code structure (1) and the second two-dimensional code structure (2) are spliced to form the complete two-dimensional code anti-counterfeiting structure(10). When the product package is not squeezed, the two-dimensional code cannot be identified and read, such that the occurrence of situations such as a two-dimensional code losing efficacy because of being stolen and scanned before the a product is sold can be effectively prevented.

## Description

### TECHNICAL FIELD

The invention relates to the field of spraying code information and package printing of commodities, and in particular relates to a two-dimensional code anti-counterfeiting structure.

### BACKGROUND ART

Liquid foods, such as milk and yogurt, as well as semi-liquid foods, such as juice, are usually sold in small volume consumer packaging containers. The packaging container is used to protect food throughout the value chain during transport and handling.

In recent years, for some important commodities involving human health, such as food, medicine, infant milk powder, etc., Chinese government has put forward clear requirements for management of quality system and construction of traceability information system. The development of two-dimensional code technology has enabled many merchants and commodities to have their own two-dimensional code identity. Scanning the two-dimensional code through the handheld device can greatly facilitate the anti-counterfeiting traceability of the commodities.

On the current package, a two-dimensional code is usually provided, which requires the consumer to use the mobile phone to scan, so as to achieve the purpose of participation in activities, authenticity verification of commodities, product traceability and the like. However, the two-dimensional code is usually provided in a relatively simple way, and the product may be scanned stealthily before the product is being sold.

### SUMMARY OF THE INVENTION

In order to prevent the two-dimensional code on the product package from being scanned stealthily before the product is sold, the present invention proposes a two-dimensional code anti-counterfeiting structure.

Specifically, the two-dimensional code anti-counterfeiting structure comprises a first two-dimensional code structure and a second two-dimensional code structure, the first two-dimensional code structure and the second two-dimensional code structure are obtained by dividing a whole two-dimensional code anti-counterfeiting structure, and are provided on two adjacent faces of a product package, respectively.

Further, the dividing line of the first two-dimensional code structure and the second two-dimensional code structure coincides with a folded edge of the two adjacent faces, and when the two adjacent faces of a product package are flattened to be in a same plane, the first two-dimensional code structure and the second two-dimensional code structure are spliced into the whole two-dimensional code anti-counterfeiting structure.

Further, the first two-dimensional code structure and the second two-dimensional code structure are spaced by a certain distance, and when the two adjacent faces of a product package are flattened to be in the same plane, the first two-dimensional code structure and the second two-dimensional code structure form a two-dimensional code structure that can be recognized by a device.

Further, the two adjacent faces are a top face and a side face of the product package. Further, the two adjacent faces are two adjacent side faces of the product package. Further, the two adjacent faces are a bottom face and a side face of the product package.

Further, the whole two-dimensional code anti-counterfeiting structure is divided by a straight line that divides equally or unequally.

Further, the whole two-dimensional code anti-counterfeiting structure is divided by an oblique line that divides equally or unequally.

Further, the surface of the first two-dimensional code structure is provided with an opaque easy-scratch layer or a light-transmissive film structure.

Further, the surface of the second two-dimensional code structure is provided with an opaque easy-scratch layer or a light-transmissive film structure.

The two-dimensional code anti-counterfeiting structure proposed by the invention is provided on two adjacent faces of a product package, and the two-dimensional code cannot be recognizably read when the product package is not squeezed, which can effectively prevent the occurrence of stealthy scanning and invalidation of two-dimensional code before the product is sold.

### BRIEF DESCRIPTION OF THE DRAWINGS

The drawings described herein are provided for a further understanding of the present invention, which constitute a part of application, and are not intended to limit the invention. In the drawings:
FIG. 1 is a schematic view of a whole two-dimensional code anti-counterfeiting structure according to an embodiment of the present invention.
FIG. 2 is a schematic structural view showing a two-dimensional code anti-counterfeiting structure located on two adjacent sides of a product package according to an embodiment of the present invention.
FIG. 3 is a schematic structural view showing a two-dimensional code anti-counterfeiting structure located on a top face and a side face of a product package according to an embodiment of the present invention.
FIG. 4 is a schematic structural view showing a two-dimensional code anti-counterfeiting structure located on a bottom face and a side face of a product package according to an embodiment of the present invention.
FIG. 5 is a schematic view showing a two-dimensional code structure that can be recognized by a device and is formed by a first two-dimensional code structure and a second two-dimensional code structure being spaced by a certain distance according to an embodiment of the present invention.

### DETAILED DESCRIPTION

The technical means carried out by the present invention for achieving intended inventive purpose invention are further illustrated hereinbelow in conjunction with the drawings and preferred embodiments of the invention.

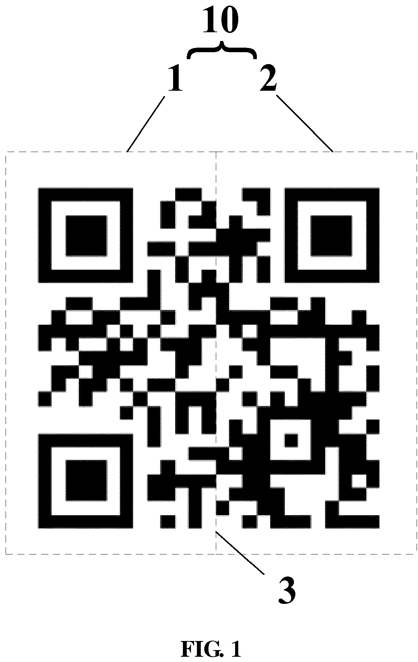

FIG. 1 is a schematic view of a whole two-dimensional code anti-counterfeiting structure according to an embodiment of the present invention. As shown in FIG. 1, the structure comprises a first two-dimensional code structure 1 and a second two-dimensional code structure 2, and the first two-dimensional code structure 1 and the second two-dimensional code structure 2 are obtained by dividing a whole two-dimensional code anti-counterfeiting structure 10.

Specifically, the whole two-dimensional code anti-counterfeiting structure 10 is divided by a straight line or an oblique line that divides equally or unequally. The term "straight line" means a line parallel to a side of the pattern of the two-dimensional code. The term "oblique line" means a line has an angle to a side of the pattern of the two-dimensional code.

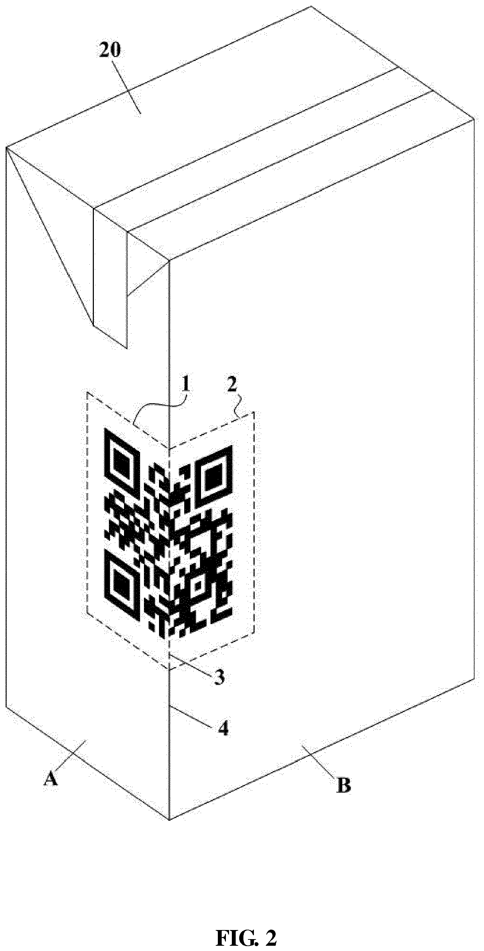

Further referring to FIGS. 2 - 4, they show schematic structural views of the two-dimensional code anti-counterfeiting structure located on two adjacent side faces, a top face and a side face, a bottom face and a side face of the product package, respectively.

As seen in FIG. 2, a first two-dimensional code structure 1 and a second two-dimensional code structure 2 are provided on two adjacent side faces of the product package 20, respectively. The two adjacent side faces are side face A and side face B of the product package 20, respectively. The first two-dimensional code structure 1 is provided on the side face A, and the second two-dimensional code structure 2 is provided on the side face B.

As shown in FIGS. 1 and 2, the dividing line 3 of the first two-dimensional code structure 1 and the second two-dimensional code structure 2 coincides with the folded edge 4 of side face A and side face B. When the side face A and side face B of the product package 20 are flattened to be in a same plane (about 180 degrees), the first two-dimensional code structure 1 and the second two-dimensional code structure 2 are spliced into a whole two-dimensional code anti-counterfeiting structure 10 (shown in FIG. 1), and the two-dimensional code anti-counterfeiting structure can be recognized by a device. When the side face A and side face B are in a state in which they are not flattened to be in a same plane as shown in FIG. 2 (about 90 degrees), the two-dimensional code cannot be recognized by a device. The device may be a scanner, a mobile phone installed with a scanned two-dimensional code app, or the like.

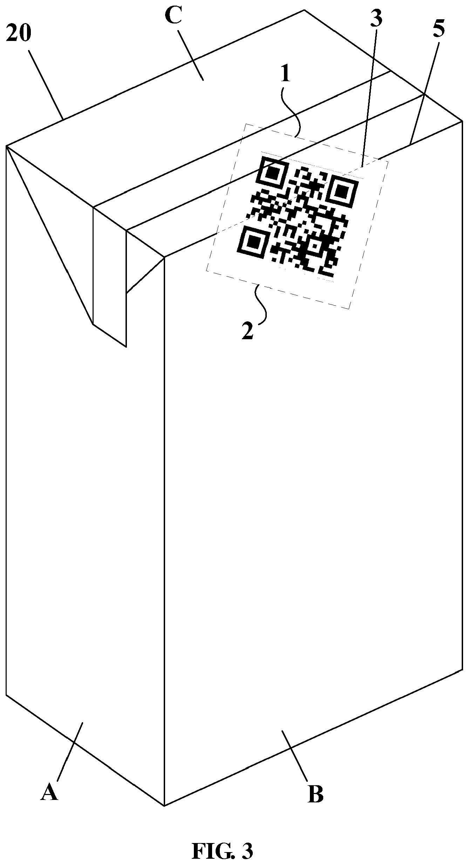

As seen in combination with FIG. 3, a first two-dimensional code structure 1 and a second two-dimensional code structure 2 are respectively provided on a top face and a side face of the product package 20. The top face and the side face are top face C and side face B of the product package 20, respectively. The first two-dimensional code structure 1 is provided on the top face C, and the second two-dimensional code structure 2 is provided on the side face B.

As shown in FIGS. 1 and 3, the dividing line 3 of the first two-dimensional code structure 1 and the second two-dimensional code structure 2 coincides with the folded edge 5 of top face C and side face B. When the top face C and the side face B of the product package 20 are flattened to be in a same plane (about 180 degrees), the first two-dimensional code structure 1 and the second two-dimensional code structure 2 are spliced into a whole two-dimensional code anti-counterfeiting structure 10 (similar to what is shown in FIG. 1, except that the dividing line 3 is an oblique line), and the two-dimensional code anti-counterfeiting structure can be recognized by the device. When the top face C and side face B are in a state in which they are not flattened to be in a same plane as shown in FIG. 3 (about 90 degrees), the two-dimensional code cannot be recognized by the device.

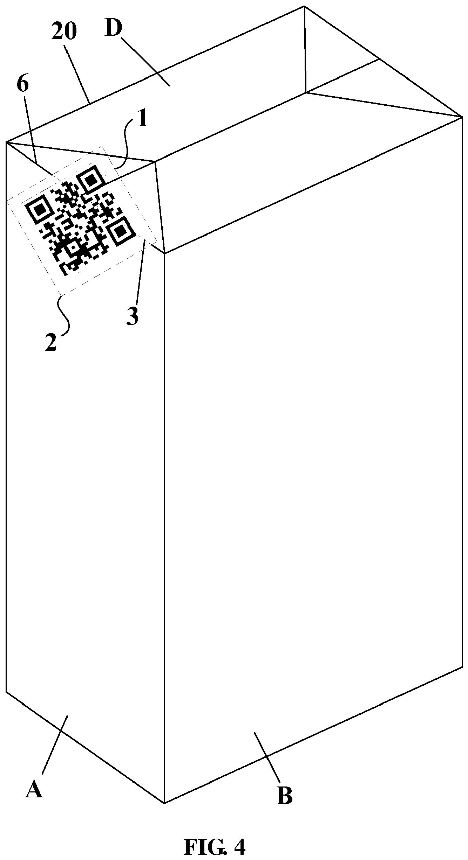

As seen in combination with FIG. 4, a first two-dimensional code structure 1 and a second two-dimensional code structure 2 are respectively provided on a bottom face and a side face of the product package 20. The bottom face and the side face are bottom face D and side face A of the product package 20, respectively. The first two-dimensional code structure 1 is provided on the bottom face D, and the second two-dimensional code structure 2 is provided on the side face A.

As shown in FIGS. 1 and 4, the dividing line 3 of the first two-dimensional code structure 1 and the second two-dimensional code structure 2 coincides with the folded edge 6 of bottom face D and side face A. When the bottom face D and side face A of the product package 20 are flattened to be in a same plane (about 180 degrees), the first two-dimensional code structure 1 and the second two-dimensional code structure 2 are spliced into a whole two-dimensional code anti-counterfeiting structure 10 (similar to what is shown in FIG. 3, except that dividing line 3 is an oblique line), and the two-dimensional code anti-counterfeiting structure can be recognized by the device. When the bottom face D and side face A are in a state in which they are not flattened to be located in the same plane as shown in FIG. 4 (about 90 degrees), the two-dimensional code cannot be recognized by the device.

In a specific embodiment, the product package 20 can be a package of milk drinks. When the package is filled with milk, the two-dimensional code on the package cannot be directly recognized. If someone squeezes the package to scan the two-dimensional code, he will damage the package and affect the sales of the product. By this means, it is possible to effectively prevent the occurrence of stealthy scanning and invalidation of two-dimensional code before the product is sold. The users who have purchased the product can flatten the two faces printed with the two-dimensional code to be in a same plane after drinking up the milk, and scan the two-dimensional code to participate in the bonus point activity or pseudo-verification of product released by the product supplier through the two-dimensional code link, etc.

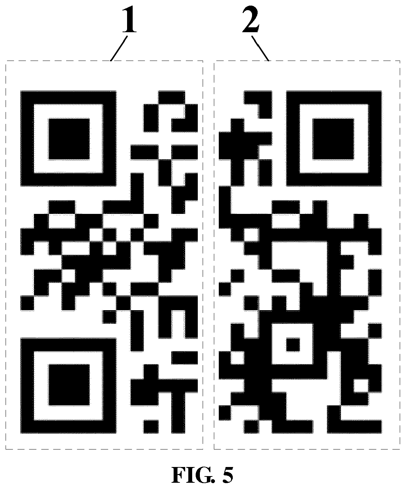

In an embodiment, as shown in FIG. 5, a first two-dimensional code structure 1 and a second two-dimensional code structure 2 can also be recognized by the device even they are spaced by a certain distance. Therefore, taking the embodiment shown in FIG. 2 as an example, on the product package 20 shown in FIG. 2, the positions that the first two-dimensional code structure 1 and the second two-dimensional code structure 2 are provided may have an appropriately distance from the folded edge 4 (for example, the distance from the edge 4 is not more than the side length of a two-dimensional code pixel). When side face A and side face B are flattened to be in a same plane, the first two-dimensional code structure 1 and the second two-dimensional code structure 2 are spliced into a two-dimensional code structure that can be recognized by the device (as shown in FIG. 5).

Further, on the surface of the first two-dimensional code structure 1, an opaque easy-scratch layer or a light-transmissive film structure may be provided; on the surface of the second two-dimensional code structure 2, an opaque easy-scratch layer or a light-transmissive film structure may be provided. The two-dimensional code anti-counterfeiting structure proposed by the invention is provided on two adjacent faces of a product package, so the two-dimensional code cannot be recognizably read when the product package is not squeezed, which can effectively prevent the occurrence of stealthy scanning and invalidation of two-dimensional code before the product is sold.

The above specific embodiments further describe the inventive purpose, technical solution, and beneficial effects of the present invention in details, and it should be understood that the foregoing description is merely specific embodiments, and should not be deemed to restrict the protection scope of the present invention. All modifications, equivalent substitutions, improvements, etc., made within the spirit and scope of the invention are intended to be included within the scope of the invention.

## Claims

1. A two-dimensional code anti-counterfeiting structure, **characterized in** comprising a first two-dimensional code structure (1) and a second two-dimensional code structure (2), the first two-dimensional code structure (1) and the second two-dimensional code structure (2) are obtained by dividing a whole two-dimensional code anti-counterfeiting structure (10), and are provided on two adjacent faces of a product package (20), respectively.

2. The two-dimensional code anti-counterfeiting structure according to claim 1, **characterized in that**, the dividing line of the first two-dimensional code structure (1) and the second two-dimensional code structure (2) coincides with a folded edge of the two adjacent faces, and when the two adjacent faces of the product package (20) are flattened to be in a same plane, the first two-dimensional code structure (1) and the second two-dimensional code structure (2) are spliced into the whole two-dimensional code anti-counterfeiting structure (10).

3. The two-dimensional code anti-counterfeiting structure according to claim 1, **characterized in that**, the first two-dimensional code structure (1) and the second two-dimensional code structure (2) are spaced by a certain distance, and when the two adjacent faces of the product package (20) are flattened to be in a same plane, the first two-dimensional code structure (1) and the second two-dimensional code structure (2) form a two-dimensional code structure that can be recognized by a device.

4. The two-dimensional code anti-counterfeiting structure according to any one of claims 1-3, **characterized in that**, the two adjacent faces are a top face and a side face of the product package (20).

5. The two-dimensional code anti-counterfeiting structure according to any one of claims 1-3, **characterized in that**, the two adjacent faces are two adjacent side faces of the product package (20).

6. The two-dimensional code anti-counterfeiting structure according to any one of claims 1-3, **characterized in that**, the two adjacent faces are a bottom face and a side face of the product package (20).

7. The two-dimensional code anti-counterfeiting structure according to any one of claims 1-3, **characterized in that**, the whole two-dimensional code anti-counterfeiting structure (10) is divided by a straight line that divides equally or unequally.

8. The two-dimensional code anti-counterfeiting structure according to any one of claims 1-3, **characterized in that**, the whole two-dimensional code anti-counterfeiting structure (10) is divided by an oblique line that divides equally or unequally.

9. The two-dimensional code anti-counterfeiting structure according to any one of claims 1-3, **characterized in that**, the surface of the first two-dimensional code structure (1) is provided with an opaque easy-scratch layer or a light-transmissive film structure.

10. The two-dimensional code anti-counterfeiting structure according to any one of claims 1-3, **characterized in that**, the surface of the second two-dimensional code structure (2) is provided with an opaque easy-scratch layer or a light-transmissive film structure.
